# EUROPÄISCHE PATENTANMELDUNG

(11) **EP 2 821 298 A1**
(43) Veröffentlichungstag der Anmeldung: **07.01.2015**
(21) Anmeldenummer: 14174033.2
(22) Anmeldetag: 26.06.2014
(51) Int. Cl.: B60S 1/34, F16F 9/34, F16F 13/00, F16F 9/02

(54) **Klappdämpfer für einen Wischerarm**

(30) Priorität: 05.07.2013 DE 102013213230
(71) Anmelder: ROBERT BOSCH GMBH, 70442 Stuttgart (DE)
(72) Erfinder: Knauf, Richard, 67480 Roppenheim (FR); Mayer, Stephan, 77855 Achern (DE)

(57) **Zusammenfassung**

Ein Wscherarm (110) eines Wschersystems umfasst eine erste Anlenkung (130) zur Verbindung mit einer Wischerwelle (115) und eine zweite Anlenkung (135) zur Verbindung mit einem Wscherblatt (125). Dabei sind die Anlenkungen (130, 135) um eine Klappachse (140) klappbar miteinander verbunden und es ist ein elastisches Element (145) zur Bereitstellung einer Vorspannung der Anlenkungen um die Klappachse (140) vorgesehen. Ein Klappdämpfer (150) für den Wischerarm (110) umfasst ein erstes Dämpferelement (210) zur Verbindung mit der ersten Anlenkung (130) und ein zweites Dämpferelement (215) zur Verbindung mit der zweiten Anlenkung (135), wobei der Klappdämpfer (150) eine vorbestimmte Bremskraft um die Klappachse (140) bereitstellt. Dabei sind die Dämpferelemente (210, 215) linear gegeneinander verschiebbar angeordnet und greifen so ineinander ein, dass die Bremskraft erst bewirkt wird, wenn ein Klappwinkel zwischen den Anlenkungen (130, 135) größer als ein vorbestimmter Wert (905) ist.

## Beschreibung

Die Erfindung betrifft einen Wischerarm für ein Wischersystem an einem Kraftfahrzeug. Insbesondere betrifft die Erfindung einen Klappdämpfer an dem Wischerarm.

### Stand der Technik

Ein Wischersystem ist dazu eingerichtet, ein Wischerblatt in einer oszillierenden Bewegung um eine Wischerwelle über eine zu reinigende Oberfläche zu führen. Das Wischersystem umfasst einen Wischerarm zur Verbindung der Wischerwelle mit dem Wischerblatt. Dabei ist der Wischerarm üblicherweise zweiteilig ausgeführt, wobei die einzelnen Teile um eine Klappachse verschwenkt werden können. Der Teil des Wischerarms, der das Wischerblatt trägt, kann so vom Kraftfahrzeug bzw. der zu reinigenden Oberfläche abgeklappt werden. Dadurch kann beispielsweise das Wischerblatt erleichtert gereinigt werden. Außerdem kann das Wischerblatt am Ende seiner Lebensdauer erleichtert ausgetauscht werden. Ferner kann der Wischerarm erleichtert auf der Wischerwelle montiert werden. Schließlich kann der Klappmechanismus dazu dienen, eine Beschädigung des Wischerblatts beispielsweise bei Festfrieren an der zu reinigenden Oberfläche oder bei hoher Temperatur zu vermeiden.

Ein modernes Kraftfahrzeug kann einen langen Wischerarm erfordern und ein Einbauraum im Bereich einer Ruhestellung des Wischerarms kann knapp bemessen sein. Außerdem können Zusatzfunktionen in den Wischerarm integriert sein, beispielsweise beheizbare Düsen für ein Reinigungsfluid. Diese Faktoren tragen dazu bei, dass ein abgeklappter Wischerarm, der ungebremst zurückgeklappt wird, bis das Wischerblatt an die zu reinigende Oberfläche anschlägt, Schäden am Wischersystem am Kraftfahrzeug bewirken kann. Es wird daher häufig ein Abklappwinkel des Wischerarms begrenzt, sodass die maximale kinetische Energie des Wischerarms bzw. des Wischerblatts begrenzt ist. Häufig wird auch eine Serviceposition, in der der Wischerarm in einer stabilen Position abgeklappt ist, nicht implementiert. Durch diese Einschränkungen können die oben genannten Funktionen des abklappbaren Wischerarms nicht oder teilweise nicht mehr erfüllt werden. Außerdem kann eine Verbindung zwischen dem Wischerblatt und dem Wischerarm aufgrund des begrenzten Abklappwinkels eine fahrzeugspezifische Konstruktion erfordern. Darüber hinaus kann ein Benutzer, der in Unkenntnis der Beschränktheit des Abklappwinkels ist, den Wischerarm versehentlich mehr als vorgesehen abklappen und dabei einen Schaden am Wischersystem verursachen.

Der vorliegenden Erfindung liegt daher die Aufgabe zugrunde, einen Klappdämpfer für einen Wischerarm anzugeben, der einen ausreichenden Abklappwinkel erlaubt und gleichzeitig Schäden durch den zurückklappenden Wischerarm vermeidet. Eine weitere Aufgabe besteht in der Angabe einer Feder-Dämpfer-Kombination und eines Wischerarms für das Wischersystem. Die Erfindung löst diese Aufgabe mittels der Gegenstände der unabhängigen Ansprüche. Unteransprüche geben bevorzugte Ausführungsformen wieder.

### Offenbarung der Erfindung

Ein Wischerarm eines Wischersystems umfasst eine erste Anlenkung zur Verbindung mit einer Wischerwelle und eine zweite Anlenkung zur Verbindung mit einem Wischerblatt. Dabei sind die Anlenkungen um eine Klappachse klappbar miteinander verbunden und es ist ein elastisches Element zur Bereitstellung einer Vorspannung der Anlenkungen um die Klappachse vorgesehen. Ein Klappdämpfer für den Wischerarm umfasst ein erstes Dämpferelement zur Verbindung mit der ersten Anlenkung und ein zweites Dämpferelement zur Verbindung mit der zweiten Anlenkung, wobei der Klappdämpfer eine vorbestimmte Bremskraft um die Klappachse bereitstellt. Dabei sind die Dämpferelemente linear gegeneinander verschiebbar angeordnet und greifen so ineinander ein, dass die Bremskraft erst bewirkt wird, wenn ein Klappwinkel zwischen den Anlenkungen größer als ein vorbestimmter Wert ist.

Der vorbestimmte Wert kann so gewählt werden, dass die beiden Anlenkungen im Wischbetrieb des Wschersystems um die Klappachse ungebremst verschwenkt werden können. So kann auch eine komplex geformte zu reinigende Oberfläche, insbesondere eine Frontscheibe eines Kraftfahrzeugs, mit gleichmäßiger Anpresskraft mit dem Wscherblatt überstrichen werden. Eine Dämpfung der Bewegung um die Klappachse findet dabei noch nicht statt oder ist vernachlässigbar klein.

Bevorzugterweise bildet eines der Dämpferelemente einen Zylinder und das andere einen Kolben, um ein Fluid durch eine Drossel zu bewegen, um die Bremskraft zu bewirken. Dadurch kann ein mechanischer Verschleiß des Klappdämpfers gering gehalten werden. Außerdem kann ein Spaltverlust zwischen den Dämpferelementen, etwa durch eine Fertigungstoleranz oder einen Verschleiß über die Lebensdauer, zugelassen werden. Der Klappdämpfer kann so langlebig und robust sein. Das Fluid kann insbesondere Luft umfassen, sodass eine Leckage des Arbeitsmediums unkritisch ist.

Der Arbeitsraum des Zylinders kann insbesondere hohlzylindrisch sein und der Kolben kann eine konzentrische Aussparung zur Aufnahme eines Abschnitts des elastischen Elements aufweisen. Dadurch kann der Klappdämpfer Platz sparend konzentrisch um das elastische Element herum angeordnet sein.

In einer besonders bevorzugten Ausführungsform sind Kolben und Zylinder derart geformt, dass ein radialer Ringspalt zwischen ihnen besteht, wenn der Klappwinkel kleiner als der vorbestimmte Wert ist. Dadurch kann die Förderwirkung der Kolben-Zylinder-Anordnung unterhalb des vorbestimmten Klappwinkels deaktiviert sein. Außerdem kann bei kleinem Klappwinkel ein Druckausgleich des verwendeten Fluids mit einer Umgebungsluft stattfinden. Der Arbeitspunkt des Klappdämpfers kann dadurch konstant gehalten werden.

In einer Ausführungsform ist eine elastische Radialdichtung zur Abdichtung des Kolbens gegenüber dem Zylinder vorgesehen, wobei der Kolben oder der Zylinder so geformt ist, dass die elastische Dichtung radial komprimiert wird, wenn der Klappwinkel einen vorbestimmten Wert einnimmt. Dieser vorbestimmte Wert liegt bevorzugterweise in einem Bereich des Klappwinkels, in dem die Bremskraft durch den Klappdämpfer bewirkt wird.

Durch die radiale Kompression kann eine zusätzliche Reibungskraft ausgeübt werden, die die Federkraft des elastischen Elements übersteigt. Der Wischerarm kann so in eine Stellung abgeklappt werden, aus der er nicht durch das elastische Element zurückgeklappt wird. In dieser Stellung ist beispielsweise eine Montage des Wischerarms an der Wischerwelle oder ein Austausch des Wischerblatts am Wischerarm vereinfacht möglich. Ein C-Bogen, der üblicherweise in Verbindung mit dem elastischen Element zur Realisierung der stabilen Serviceposition verwendet wird, ist nicht mehr erforderlich. Außerdem kann eine progressive Dämpfung über den Klappwinkel realisiert sein, sodass ein Benutzer durch die ansteigende Betätigungskraft während des Abklappens eine Rückmeldung über das Erreichen der Serviceposition erhalten kann. Eine Beschädigung des Wschersystems durch Fehlbedienung kann so vermieden werden.

In einer weiteren Ausführungsform ist ein Einwegventil vorgesehen, um die Drossel zu überbrücken, wenn der Klappwinkel vergrößert wird. Das Abklappen des Wischerarms kann dadurch schwach oder gar nicht bedämpft sein, während das Zurückklappen in Richtung der zu reinigenden Oberfläche bedämpft ist.

Das Einwegventil kann eine elastische Membran umfassen, die über eine Öffnung des Zylinders gespannt ist, wobei die Drossel durch eine Perforation der Membran im Bereich der Öffnung realisiert ist. Dadurch können das Einwegventil und die Drossel auf einfache Weise miteinander integriert ausgeführt sein.

Die Dämpfung des Klappdämpfers ist im Allgemeinen durch Auslegung der Drossel beeinflussbar. Insbesondere kann die Drossel einen oder mehrere Strömungskanäle umfassen, deren Dimensionierung und Anzahl die Rückklappgeschwindigkeit des Wscherarms bestimmt. In einer Ausführungsform ist die Drossel durch eine Leckage im Bereich zwischen dem Zylinder und dem Kolben realisiert. Dadurch kann die Drossel auf besonders einfache und fehlertolerante Weise bereitgestellt sein.

Eine erfindungsgemäße Feder-Dämpfer-Kombination für den beschriebenen Wischerarm umfasst den beschriebenen Klappdämpfer mit dem hohlzylindrischen Arbeitsraum, wobei die Dämpferelemente mit unterschiedlichen Enden des elastischen Elements verbunden sind. So kann eine separat handhabbare Einheit aus einer Feder und dem Klappdämpfer bereitgestellt sein.

Ein erfindungsgemäßer Wischerarm für Wischersystem, insbesondere an einem Kraftfahrzeug, umfasst eine erste Anlenkung zur Verbindung mit einer Wischerwelle, eine zweite Anlenkung zur Verbindung mit einem Wischerblatt, wobei die Anlenkungen um eine Klappachse klappbar miteinander verbunden sind, ein elastisches Element zur Bereitstellung einer Vorspannung der Anlenkungen um die Klappachse und den beschriebenen Klappdämpfer zur Bewirkung einer Bremskraft um die Klappachse, wenn ein Klappwinkel zwischen den Anlenkungen kleiner als ein vorbestimmter Wert ist.

Dadurch kann ein integrierter Wischerarm bereitgestellt sein, bei dem eine Gefahr durch Schlagschäden beim Zurückklappen des Wischerarms in Richtung einer zu reinigenden Oberfläche vermieden werden.

### Kurze Beschreibung der Figuren

Die Erfindung wird nun mit Bezug auf die beigefügten Figuren genauer beschrieben, in denen:
- Figur 1: ein Wischersystem an einem Kraftfahrzeug;
- Figur 2: einen Klappdämpfer am Wischerarm von Figur 1;
- Figur 3: eine Feder-Dämpfer-Kombination für den Wischerarm von Figur 1;
- Figur 4: den Klappdämpfer von Figur 2 in einer ersten Position;
- Figur 5: den Klappdämpfer von Figur 2 in einer zweiten Position;
- Figur 6: den Klappdämpfer von Figur 2 in einer dritten Position;
- Figur 7: den Klappdämpfer von Figur 2 in einer vierten Position;
- Figur 8: ein Detail des Klappdämpfers von Figur 7, und
- Figur 9: eine exemplarische Kennlinie des Klappdämpfers von Figur 2
darstellt.

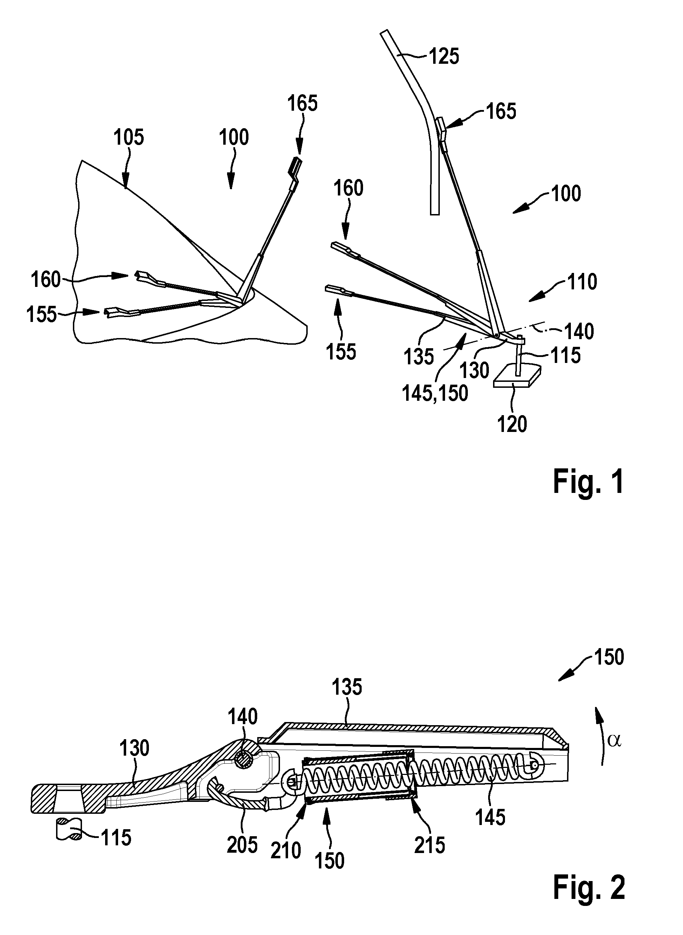

Figur 1 zeigt ein Wischersystem 100 an einem Kraftfahrzeug 105 zur Reinigung einer Oberfläche, insbesondere einer Sichtscheibe des Kraftfahrzeugs 105, etwa einer Frontscheibe. Im rechten Bereich der Figur ist das Wischersystem 100 erneut ohne das Kraftfahrzeug 105 dargestellt. Das Wischersystem 100 umfasst einen Wischerarm 110, der sich zwischen einer Wischerwelle 115 eines Wischerantriebs 120 und einem Wscherblatt 125 erstreckt. Dabei umfasst der Wischerarm 110 eine erste Anlenkung 130, die mit der Wischerwelle 115 verbunden ist, und eine zweite Anlenkung 135, die mit dem Wscherblatt 125 verbunden ist. Die Anlenkungen 130 und 135 sind um eine Klappachse 140 klappbar, die windschief zur Wischerwelle 115 verläuft. Ein Klappwinkel α bezeichnet dabei eine Auslenkung des Wscherarms 110 um die Klappachse 140 in eine von der zu reinigenden Oberfläche entfernten Richtung. Der Klappwinkel α kann als Null definiert sein, wenn die beiden Anlenkungen 130 und 135 gestreckt aneinander liegen. In Fig. 1 sind drei Positionen 155, 160 und 165 eingezeichnet, die unterschiedliche Klappwinkel α kennzeichnen.

Ein elastisches Element 145 stellt eine Vorspannung zwischen den Anlenkungen 130, 135 um die Klappachse 140 bereit. Anders ausgedrückt ist das elastische Element 145 derart zwischen den Anlenkungen 130 und 135 verbunden, dass die zweite Anlenkung 135 gegenüber der ersten Anlenkung 135 in eine vorbestimmte Position gedrückt wird. Außerdem ist ein Klappdämpfer 150 vorgesehen, der mit den Anlenkungen 130 und 135 verbunden ist und eine Bremskraft bewirkt, die einer Bewegung der Anlenkungen 130, 135 um die Klappachse 140 entgegengesetzt ist. Dabei ist die Bremskraft bevorzugterweise von einer Stellung der zweiten Anlenkung 135 bezüglich der ersten Anlenkung 130 abhängig.

Figur 2 zeigt den Klappdämpfer 150 am Wischerarm 110 des Wschersystems 100 von Figur 1 im Längsschnitt. Ein erstes Ende des elastischen Elements 145 ist unmittelbar an der zweiten Anlenkung 135 eingehängt, während das zweite Ende in einen C-Bügel 205 eingreift, der seinerseits an der ersten Anlenkung 130 eingehängt ist. Wird die zweite Anlenkung 135 um die Klappachse 140 bezüglich der ersten Anlenkung 130 weit genug nach oben geklappt, sodass die Klappachse 140 auf der anderen als der dargestellten Seite der Verbindungslinie zwischen den Einhängungspunkten des elastischen Elements 145 bzw. des C-Bügels 205 liegt, so wirkt die Kraft des elastischen Elements 145 zwischen den Anlenkungen 130 und 135 in der Darstellung von Figur 2 entgegen dem Uhrzeigersinn, sodass eine stabile Serviceposition der zweiten Anlenkung 135 erreicht werden kann. In der dargestellten Position, die während des Wscherbetriebs eingenommen wird, bewirkt das elastische Element 145 eine Bewegung der zweiten Anlenkung 135 im Uhrzeigersinn, sodass das Wscherblatt 125 (nicht dargestellt) gegen die zu reinigende Oberfläche am Kraftfahrzeug 105 gedrückt wird.

Der Klappdämpfer 150 umfasst ein erstes Dämpferelement 210 und ein zweites Dämpferelement 215, die an den Anlenkungen 130 und 135 angebracht sind. Dabei sind die Dämpferelemente 210 und 215 bevorzugterweise konzentrisch zum elastischen Element 145 ausgeführt und an dessen Enden befestigt.

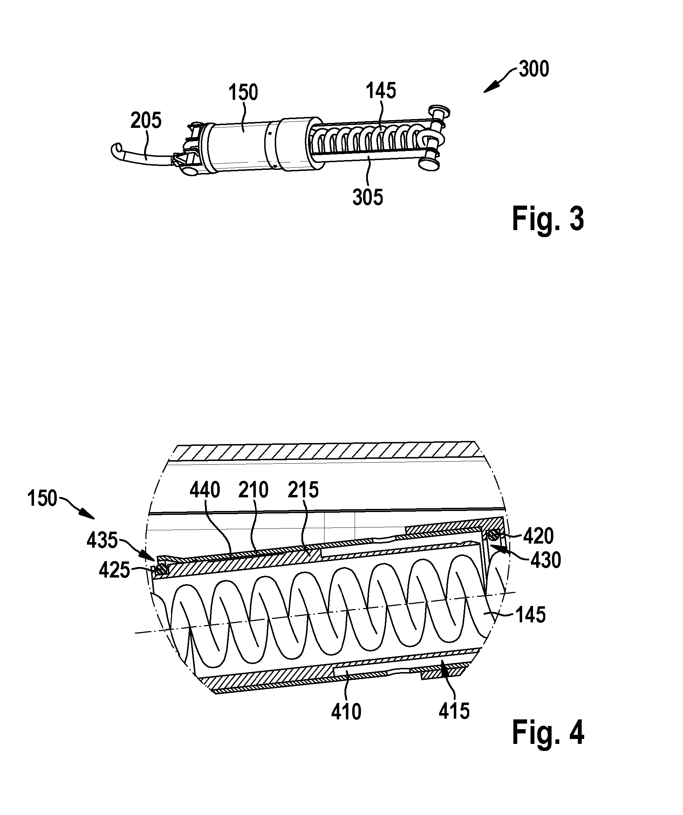

Figur 3 zeigt eine Feder-Dämpfer-Kombination 300 für den Wischerarm 110 von Figur 1. Die Feder-Dämpfer-Kombination 300 umfasst das elastische Element 145 und den Klappdämpfer 150. Der Klappdämpfer 150 kann wie dargestellt kürzer als das elastische Element 145 sein, wobei eine oder mehrere Stützen 305 zur Verbindung mit dem entfernt liegenden Einhängungspunkt des elastischen Elements 145 vorgesehen sind. Der C-Bügel 205 ist bevorzugterweise unverlierbar am einen Ende des elastischen Elements 145 bzw. des Klappdämpfers 150 angebracht.

Figur 4 zeigt den Klappdämpfer 150 von Figur 1 in einer Position, die der ersten Position 155 der zweiten Anlenkung 135 in Figur 1 entspricht. Das erste Dämpferelement 210 bildet einen Zylinder, den das zweite Dämpferelement 215 abschließt. Das erste Dämpferelement 210 ist mit der zweiten Anlenkung 135 und das zweite Dämpferelement 215 mit der ersten Anlenkung 130 verbunden, wobei eine umgekehrte Anordnung ebenfalls möglich ist. Das zweite Dämpferelement 215 weist eine konzentrische Aussparung 405 auf, durch die das elastische Element 145 verläuft. Ein Arbeitsraum 410 weist daher eine hohlzylindrische Form auf. Im Arbeitsraum 410 ist ein Fluid 415 aufgenommen, das bevorzugterweise Luft umfasst.

Eine erste Radialdichtung 420 ist am ersten Dämpferelement 210 und eine zweite Radialdichtung 425 am zweiten Dämpferelement 215 axial fixiert angebracht. In der dargestellten Position taucht das zweite Dämpferelement 215 nicht weit genug in das erste Dämpferelement 210 ein, um an der ersten Radialdichtung 420 anzuliegen, sodass sich ein erster Ringspalt 430 ergibt. Ferner ist das erste Dämpferelement 210 an dem in Figur 4 linken Ende aufgeweitet, sodass sich in der dargestellten Position ein zweiter Ringspalt 435 ergibt. Der zweite Ringspalt 435 steht über einen Überströmkanal 440 mit dem Arbeitsraum 410 in Verbindung. Über die Ringspalte 430 und 435 erfolgt ein Druckausgleich zwischen dem Arbeitsraum 410 und einer Umgebung.

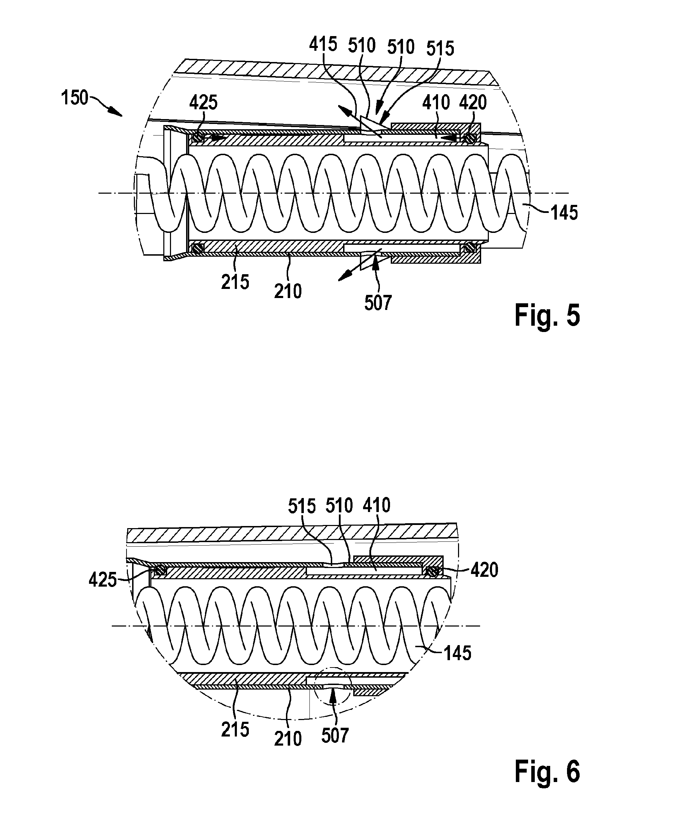

Figur 5 zeigt die Anordnung von Figur 4 in einer zweiten Position, die der Position 160 der zweiten Anlenkung 135 in Figur 1 entspricht. Das zweite Dämpferelement 215 ist so weit in das erste Dämpferelement 210 eingeschoben, dass die Radialdichtungen 420 und 425 jeweils dicht zwischen den Dämpferelementen 210 und 215 anliegen. Durch das Einschieben wird der Arbeitsraum 410 zuerst abgeschlossen und dann verkleinert. Das solchermaßen unter Druck gesetzte Fluid 410 entweicht durch eine Drossel 505, die als radiale Bohrung 507 im ersten Dämpferelement 210 vorgesehen ist. In einer alternativen Ausführungsform ist die Drossel 505 als Leckage zwischen den Dämpferelementen 210 und 215 realisiert; in diesem Fall kann eine der Radialdichtungen 420, 425 entfallen. Ein Durchlassverhalten der Drossel 505 kann durch die Zahl der Durchlässe und deren Querschnitte, Formen und Längen beeinflusst werden.

In der dargestellten, bevorzugten Ausführungsform ist die radiale Bohrung 507 der Drossel 505 durch eine elastische Membran 510, die insbesondere als Schlauchabschnitt ausgeführt sein kann, auf der Außenseite verschlossen. Die Drossel 505 kann hierbei durch eine Perforation der elastischen Membran 510 gebildet sein, die einen geringeren Durchfluss als die radiale Bohrung 507 erlaubt. Das unter Druck stehende Fluid 415 hebt die elastische Membran 510 radial ab bis diese einen Weg zur Umgebung frei gibt. Die Membran 510 bildet mit der radialen Bohrung 507 ein Einwegventil 520. Durch das Anheben der Membran 510 wird ein zusätzlicher Querschnitt frei, so dass der gesamte Querschnitt größer als der der Perforation 515 ist. Die Einschiebebewegung des zweiten Dämpferelements 215 in das erste Dämpferelement 210 wird daher nur gering gebremst.

Figur 6 zeigt den Klappdämpfer 150 von Figur 1 in einer dritten Position, die der Position 165 der zweiten Anlenkung 135 in Figur 1 entspricht. Die Position 165 kann als Serviceposition vorgesehen sein, beispielsweise zum Einbauen des Wischerarms 110 am Kraftfahrzeug 105 oder zum Austauschen des Wischerblatts 125 am Wischerarm 110. In der dargestellten Position rastet der Wischerarm 110 in seiner Bewegung um die Klappachse 140 derart ein, dass keine eigenständige bzw. durch das elastische Element 145 bewirkte Bewegung aus dieser Position heraus erfolgt. Erst durch Überwinden eines vorbestimmten Losbrechmoments um die Klappachse 140 erfolgt eine weitere Verstellung. Dadurch kann der C-Bogen 205 von Fig. 2 nicht erforderlich sein.

In der dargestellten Ausführungsform kann das Rasten in der dargestellten Position dadurch erfolgen, dass sich das erste Dämpferelement 210 im Bereich der ersten Radialdichtung 420 radial weiter nach außen oder das zweite Dämpferelement 215 im Bereich der zweiten Radialdichtung 425 radial weiter nach innen erstreckt. Dadurch kann mittels der Radialdichtungen 520, 425 eine Klemmung zwischen den Dämpferelementen 210, 215 bewirkt werden, die einer Bewegung um die Klappachse 140 entgegen wirkt.

Figur 6 zeigt den Klappdämpfer 150 von Figur 5, nachdem der Druck des Fluids 415 im Arbeitsraum 410 im Wesentlichen dem Umgebungsdruck entspricht. Die elastische Membran 510 deckt die radiale Bohrung 507 im ersten Dämpferelement 210 ab und ein weiterer Austausch von Fluid 415 erfolgt durch die Perforation 515 in der elastischen Membran 510.

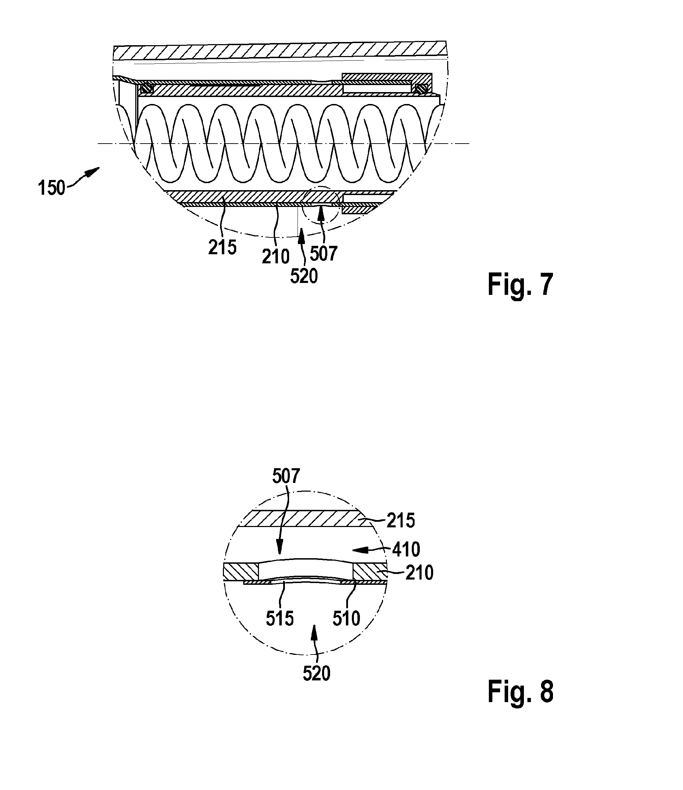

Figur 7 zeigt die Konstellation von Figur 6 bei der Rückbewegung in Richtung der ersten Position 155. Dabei wird das zweite Dämpferelement 215 aus dem ersten Dämpferelement 210 heraus bewegt, wodurch sich das Volumen des Arbeitsraums 410 vergrößert und der Druck des sich darin befindlichen Fluids 415 unter den der Umgebung abfällt. Durch den Umgebungsdruck bleibt die elastische Membran 510 in der dargestellten Stellung, in der über der radialen Bohrung 507 im ersten Dämpferelement 210 anliegt. Der Druckausgleich des Arbeitsraums 410 gegenüber einer Umgebung findet nur noch durch die Perforation 515 der Membran 510 statt.

Figur 8 zeigt die elastische Membran 510 im Bereich der radialen Bohrung 507. Die Perforation 515 der Membran 510 weist einen kleineren Querschnitt als die radiale Bohrung 507 im ersten Dämpferelement 210 auf. Durch die Wirkung des Einwegventils 520 ist der wirksame Querschnitt beim Einschieben des zweiten Dämpferelements 215 in das erste Dämpferelement 210 groß und beim Ausschieben klein. Die Bremskraft des Klappdämpfers 150 ist daher beim Einschieben bzw. beim Hochklappen der zweiten Anlenkung 135 bezüglich der ersten Anlenkung 130 klein und beim Ausschieben des zweiten Dämpferelements 215 aus dem ersten Dämpferelement 210 bzw. dem Zurückklappen der zweiten Anlenkung 135 bezüglich der ersten Anlenkung 130 groß. In einer anderen Ausführungsform kann der Klappdämpfer 150 auch ohne die Membran 510 bzw. das Einwegventil 520 ausgeführt sein.

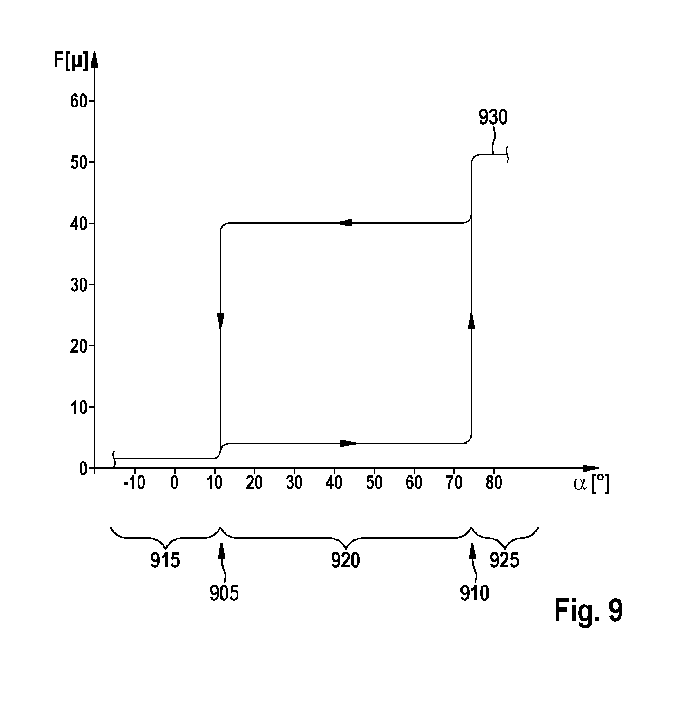

Figur 9 zeigt eine exemplarische Kennlinie des Klappdämpfers 150 der vorangehenden Figuren. In horizontaler Richtung ist der Klappwinkel α und in vertikaler Richtung ein Reibkoeffizient angetragen, der proportional zu einer Reibkraft des Klappdämpfers 150 ist. Der Klappwinkel α ist bezüglich eines vorbestimmten Werts 905 und eines zweiten vorbestimmten Werts 910 in einen unteren Bereich 915, einen mittleren Bereich 920 und einen oberen Bereich 925 eingeteilt. In der ersten Position 155 aus Figur 1 liegt der Klappwinkel α im unteren Bereich, in der zweiten Position 160 im mittleren Bereich 920 und in der dritten Position 165 im oberen Bereich 925.

Die dargestellte Kennlinie 930 bezieht sich auf die oben beschriebene Ausführungsform mit dem Einwegventil 520. Im unteren Bereich 915 schließen die Dämpferelemente 210 und 215 nicht dicht gegeneinander ab (vgl. Figur 4), sodass der Reibkoeffizient Reibungskraft gering ist. Im mittleren Bereich 920 wird in der Darstellung von Figur 9 von links nach rechts das zweite Dämpferelement 215 in das erste Dämpferelement 210 eingeschoben, wobei die Dämpferelemente 210 und 215 gegeneinander abgedichtet sind und das Fluid 415 aus dem Arbeitsraum 410 durch das Einwegventil 520 nach außen strömt. Durch den relativ großen Querschnitt des Einwegventils 520 bzw. der von ihr umfassten Drossel 505 ist die Reibkraft dabei noch relativ gering (vgl. Figur 5).

Im oberen Bereich 925 erfolgt die optionale Klemmung der Radialdichtungen 420 und 425 zwischen den Dämpferelementen 210 und 215 (vgl. Figur 7). Die Reibkraft zwischen den Dämpferelementen 210 und 215 ist dabei relativ groß.

In der umgekehrten Richtung sinkt beim Übergang vom oberen Bereich 925 zum mittleren Bereich 920 die Reibkraft nur auf einen mittleren Wert ab, da das Einwegventil 520 verschlossen ist und Fluid 415 aus der Umgebung durch die Perforation 515 in der elastischen Membran 510 in den Arbeitsraum 410 einströmen muss (vgl. Figur 6). Im unteren Bereich 915 schließlich besteht wieder nur ein geringer Reibkoeffizient.

## Patentansprüche

1. Klappdämpfer (150) für einen Wischerarm (110) eines Wischersystems (100), wobei der Wischerarm (110) eine erste Anlenkung (130) zur Verbindung mit einer Wischerwelle (115) und eine zweite Anlenkung (135) zur Verbindung mit einem Wischerblatt (125) umfasst, die Anlenkungen (130, 135) um eine Klappachse (140) klappbar miteinander verbunden sind und ein elastisches Element (145) zur Bereitstellung einer Vorspannung der Anlenkungen (130, 135) um die Klappachse (140) vorgesehen ist, wobei der Klappdämpfer (150) folgendes umfasst:
- ein erstes Dämpferelement (210) zur Verbindung mit der ersten Anlenkung (130);
- ein zweites Dämpferelement (215) zur Verbindung mit der zweiten Anlenkung (135),
- wobei der Klappdämpfer (150) eine vorbestimmte Bremskraft um die Klappachse (140) bereitstellt,
**dadurch gekennzeichnet, dass**
- die Dämpferelemente (210, 215) linear gegeneinander verschiebbar angeordnet sind und so ineinander eingreifen, dass die Bremskraft erst bewirkt wird, wenn ein Klappwinkel (α) zwischen den Anlenkungen (130, 135) größer als ein vorbestimmter Wert (905) ist.

2. Klappdämpfer (150) nach Anspruch 1, wobei eines der Dämpferelemente einen Zylinder (210) und das andere einen Kolben (215) bildet, um ein Fluid (415) durch eine Drossel (505) zu bewegen, um die Bremskraft zu bewirken.

3. Klappdämpfer (150) nach Anspruch 2, wobei der Arbeitsraum (410) des Zylinders (210) hohlzylindrisch ist und der Kolben (215) eine konzentrische Aussparung (405) zur Aufnahme eines Abschnitts des elastischen Elements (145) aufweist.

4. Klappdämpfer (150) nach einem der Ansprüche 2 oder 3, wobei Kolben (215) und Zylinder (210) derart geformt sind, dass ein radialer Ringspalt (430, 435) zwischen ihnen besteht, wenn der Klappwinkel (α) kleiner als der vorbestimmte Wert (905) ist.

5. Klappdämpfer (150) nach einem der Ansprüche 2 bis 4, ferner umfassend eine elastische Radialdichtung (420, 425) zur Abdichtung des Kolbens (215) gegenüber dem Zylinder (210), wobei der Kolben (215) oder der Zylinder (210) so geformt ist, dass die elastische Dichtung (420, 425) radial komprimiert wird, wenn der Klappwinkel (α) einen vorbestimmten Wert (910) einnimmt.

6. Klappdämpfer (150) nach einem der Ansprüche 2 bis 5, ferner umfassend ein Einwegventil (520) um die Drossel (505) zu überbrücken, wenn der Klappwinkel (α) vergrößert wird.

7. Klappdämpfer (150) nach Anspruch 6, wobei das Einwegventil (520) eine elastische Membran (510) umfasst, die über eine Öffnung des Zylinders (210) gespannt ist, und die Drossel (505) durch eine Perforation (515) der Membran (510) im Bereich der Öffnung realisiert ist.

8. Klappdämpfer (150) nach einem der Ansprüche 2 bis 5, wobei die Drossel (505) durch eine Leckage im Bereich zwischen dem Zylinder (210) und dem Kolben (215) realisiert ist.

9. Feder-Dämpfer-Kombination (300) für einen Wischerarm eines Wischersystems, umfassend den Klappdämpfer (150) nach einem der Ansprüche 3 bis 8 und das elastische Element (145), wobei die Dämpferelemente (210, 215) mit unterschiedlichen Enden des elastischen Elements (145) verbunden sind.

10. Wischerarm (110) für Wischersystem (100), umfassend
- eine erste Anlenkung (130) zur Verbindung mit einer Wischerwelle (115);
- eine zweite Anlenkung (135) zur Verbindung mit einem Wischerblatt (125),
- wobei die Anlenkungen (130, 135) um eine Klappachse (140) klappbar miteinander verbunden sind,
- ein elastisches Element (145) zur Bereitstellung einer Vorspannung der Anlenkungen (130, 135) um die Klappachse (140), und
- einen Klappdämpfer (150) nach einem der Ansprüche 2 bis 9 zur Bewirkung einer Bremskraft um die Klappachse (140), wenn ein Klappwinkel (α) zwischen den Anlenkungen (130, 135) kleiner als ein vorbestimmter Wert (905) ist.
